Europäisches Patentamt

European Patent Office

Office européen des brevets

(11) Publication number: **0 210 466**
**A2**

## (12) EUROPEAN PATENT APPLICATION

(21) Application number: **86109128.8**

(51) Int. Cl.⁴: **G06F 15/40**

(22) Date of filing: **04.07.86**

(30) Priority: **01.08.85 US 761739**

(43) Date of publication of application:
**04.02.87 Bulletin 87/06**

(84) Designated Contracting States:
**DE FR GB**

(71) Applicant: **International Business Machines
Corporation
Old Orchard Road
Armonk, N.Y. 10504(US)**

(72) Inventor: **Ferro, John T., Jr.
6411 Rizal Court
San Jose CA 95119(US)**
Inventor: **Jacobs, Patrick C.
1107 Virgil Place
San Jose CA 95120(US)**
Inventor: **Laye, Robert M.-L.
3475 La Mesa Drive
Hayward CA 94542(US)**
Inventor: **Starr, Brian D.
1105 Easy Street
Morgan Hill CA 95037(US)**

(74) Representative: **Ekström, Gösta E.
IBM Svenska AB Intellectual Property
Department Box 962
S-181 09 Lidingö(SE)**

(54) **A method for moving VSAM base clusters while maintaining alternate indices into the cluster.**

(57) A VSAM data set is moved to another DASD volume in less time than that required by logical processing by invoking a DASD track-oriented process extrinsic to VSAM which can select and order the transfer of VSAM components to a newly created VSAM cluster.

FIG. 1

VSAM:=INDEX
SEQUENTIAL
ACCESS
METHOD

# A METHOD FOR MOVING VSAM BASE CLUSTERS WHILE MAINTAINING ALTERNATE INDICES INTO THE CLUSTER

This invention relates to a method for moving individual base clusters of VSAM from a source to a target DASD volume while maintaining the integrity of the data set and its associated structures.

In the prior art, Plow, USP 4,408,273, "Method and Means for Cataloging Data Sets Using Dual Keyed Data Sets and Direct Pointers", issued October 4, 1983, describes various index sequential access methods, while Weiderhold, "Data Base Design", McGraw-Hill Publishing Co., pp. 182-189, copyright 1977, teaches some VSAM fundamentals. The data structures described by Weiderhold include the base clusters which are organized - (cataloged) in the data structures used in the method described by Plow. Reference should also be made to IBM MVS/XA VSAM Users Guide, GC26-4015, page 39, published 1983, and IBM Integrated Catalog Facility, GC26-4019, pp. 178-188, published 1983. These IBM publications disclose VSAM data set transfer commands at the logic level. They also disclose the external interfaces for the access method services (AMS) utility.

It is an object of this invention to devise a method in which an extrinsic track-oriented process manages the selection, ordering, transfer, and catalog and index updating of a VSAM base cluster data set. More particularly, it is an object to devise a method for moving (not copying) a VSAM data set to another DASD volume in less time than by logical processing, said method avoiding the rebuilding of alternate indices wherever they may be situated at the target volume or otherwise.

The foregoing objects are satisfied by a method for moving a base cluster of VSAM (KSDS or ESDS) from a source to a target DASD volume. The source volume preferably may include an index and alternate indices directed to the cluster, a catalog mapping relations among VSAM components including candidate volumes, a virtual volume data set and records (VVDS and VVR) describing the VSAM components, and a volume table of contents (VTOC) relating VSAM component names to volume addresses. The method maintains the integrity of the cluster and associated catalogs by way of the following steps: (a) creating a newly defined VSAM data set and moving the data cluster by way of full-track read and write operations onto the target volume; (b) defining the indices, if any, on the target volume; and (c) renaming the newly defined data set.

Where the clusters are of the type having alternate indices, the method satisfying the above objects includes the steps of (a) defining a newly defined catalog record and allocating space for a cluster on the target volume; (b) moving via full-track read/write commands a designated cluster to the defined space; (c) disconnecting the alternate index from the original catalog record and reconnecting the alternate index into the newly defined cluster; (d) retrieving other associated catalog information such as paths, candidate volumes, and passwords, and defining such associated information into the newly defined catalog record; (e) deleting the original catalog record and cluster; and - (f) renaming the newly defined catalog record to the original base cluster name.

The invention, which is defined in the attached claims, is described in detail below with reference to the drawings, of which;

Figure 1 shows abbreviated relationships between the CPU, the storage subsystem, and elements of the VSAM system involved in the method of this invention.

Figure 2 depicts a high-level flow involved in moving said data from a source to target DASD volumes.

Presently, in order to move a VSAM data set from one DASD volume to another, it is necessary to recognize and manipulate the smallest (atomic) data element of the data set and transport it from one volume to another and concurrently create indices referencing that data element. A VSAM data set includes a base cluster of keyed sequential data sets and/or event sequence data sets. The volume includes an index and alternate indices into the cluster, a catalog mapping relations among VSAM components including candidate volumes, a virtual volume data set and records (VVDS and VVR) describing the VSAM components and a volume table of contents (VTOC) relating VSAM component names to volume addresses.

In the past, in order to move a VSAM base cluster from a source to a target DASD volume, it has been necessary to define the entire VSAM data set structure prior to initiating the move. This involves changes to VTOC's, catalog entries, and VVDS's. The source data set must now be opened and each logical record extracted one at a time and inserted into the target data set. As part of the insertion into the target data set operation, it is necessary to recognize any keyed fields and execute appropriate insertions into the indices, thereby rebuilding them. At the completion of this process for all of the records, the original source data set must be erased. Consequently, it is necessary to rebuild the entire data set and catalog, thus incurring overhead in the form of CPU time and channel activity (CPU/staged storage paths).

In this invention, in order to avoid reconstructing the indices as part of moving a VSAM base cluster from a source to a target DASD volume, the invention is premised on an extrinsic track-oriented process for managing the selection, ordering, transfer, and catalog and index updating. Broadly, this means that it is necessary to use host I/O commands for the reading and writing of full-track data from the source DASD to a buffer pool at the host and then back out to a target DASD from the buffer pool. Otherwise, some VSAM interfaces, such as the DEFINE command, would have to allocate the area, set up the catalog structure for the newly defined data set, and copy the data set by REPRO or IMPORT/EXPORT commands. Furthermore, the AMS commands would have to rebuild the alternate indices and complete the sphere record environment including all candidate volumes, paths, passwords, etc. In both the invention and its alternatives, calls to DADSM erase the source data set after the move has been successfully completed. Advantageously, the method of this invention allows failure of a step, permitting default to the original environment without information loss.

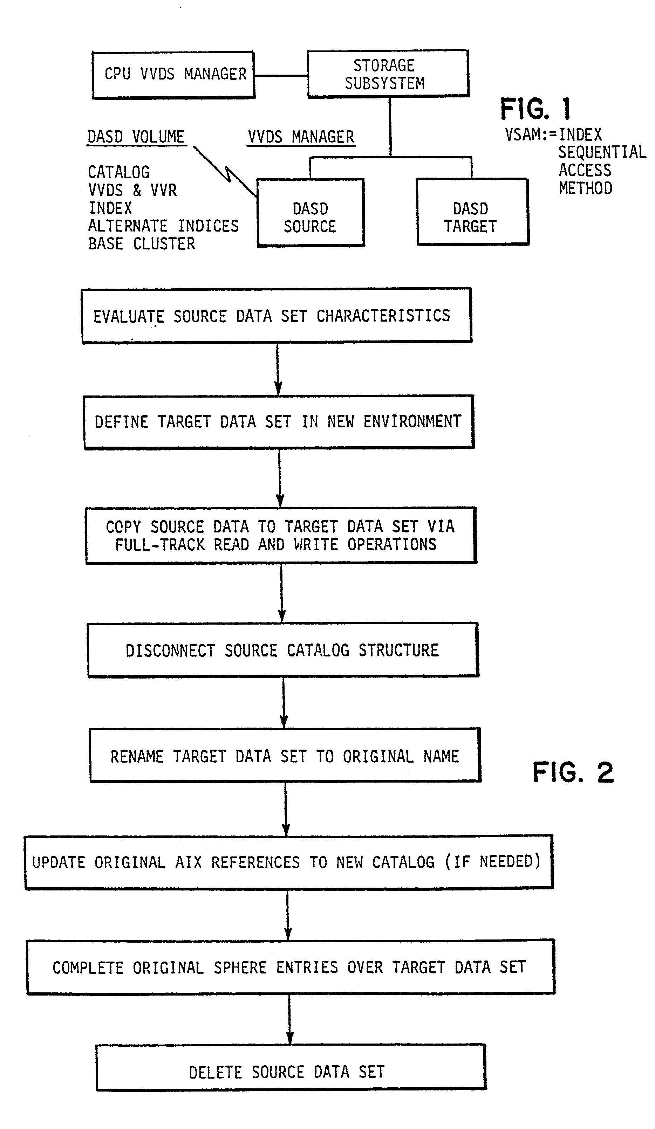

Referring now to the Plow reference, there is described a complete VSAM data set and catalog structure including the VVDS declaration, VTOC interaction, and BCS catalog reference information (see Plow, Figure 1, element 60; see column 8, line 59, through column 9, line 28). Furthermore, Plow is incorporated in this specification in its entirety by reference. In this regard, it should be understood that the invention operates in a Plow-type system both with reference to the physical and software processing environments.

Plow describes a data set catalog structure which permits accessing data sets efficiently either in a single or multiple CPU environment. Also, Plow teaches that if a catalog could be used as an index to a data set instead of the data set itself, then defects in the data set would not invalidate the index to the extent that the index is an independently alterable entity from the data set. The Plow patent is directed to the ICF catalog, the maintenance of which is considered to be a system function. For purposes of this invention, however, said system functions are not described and are considered explicitly outside the scope of this preferred embodiment.

Referring now to Figure 1, there is shown the constituents involved in the invention. These include a VVDS manager resident in the CPU. The VVDS manager controls access to the VVDS data set. The VVDS data set defines the VSAM cluster structure including the base and alternate indices.

Referring now to Figure 2, there is depicted the flow of control of the method. As set out, the method involves evaluating source data set characteristics. This is followed by defining the target data set in a new environment. After this, the source data is copied to the target data set by way of full read and write operations and disconnection is made with the source catalog structure. Next, the target data set is renamed to that of the original name and updates of the original AIX references to the new catalog are made if needed. Lastly, the original sphere entries to the target data set are completed and the source data set is deleted.

Referring now to the table, there is set out a job control language sequence implementing the method steps of the invention. Job control language (JCL) is an operating system language described in IBM OS/VS II MVS JCL, GC28-0692-4, 5th Edition, May 1979. JCL is a metaprogram binding resources to application programs for the duration of their execution and for the duration of the execution of any related tasks. The syntax from left to right is <name of program>: :<JCL statement>: :<parameters for JCL statements>.

In the table, the first statement designates the name of the task exercising the method of the invention. Several statements are then directed to garnering the resources such as the data sets and system priority.

"The following JCL code sequence assumes that a target volume has been prepared to accept a VSAM base cluster."

```
//COPYJOB  JOB  ,MSGLEVEL=(1,1),CLASS=A,REGION=3500K
/*ROUTE     PRINT STLVM7/JTFERRO
//*              COPY BASE CLUSTER FUNCTION
//*
//* STEP DSSUDUMP: ADRDSSU DUMP OF CLUSTER1.BASE CLUSTER
//DSSUDUMP EXEC PGM=ADRDSSU,REGION=2000K
//SYSPRINT DD   SYSOUT=A
//DASD01   DD   UNIT=3330,VOL=SER=333001,DISP=OLD
//TAPE01   DD   UNIT=3330,VOL=SER=333002,SPACE=(TRK,(1,1)),
//  DISP=(NEW,KEEP),DSNAME=USER.BACKUP
//SYSIN    DD   *
  DUMP IDD(DASD01) ODD(TAPE01) DATASET(INCLUDE(CLUSTER1.BASE))
/*
//* STEP DSSUREST: ADRDSSU RESTORE OF CLUSTER1.BASE CLUSTER
//DSSUREST EXEC PGM=ADRDSSU,REGION=2000K
//STEPCAT  DD   DSN=USE.CAT2,DISP=OLD
//SYSPRINT DD   SYSOUT=A
//DASD02   DD   UNIT=(3330),VOL=(PRIVATE,SER=333002),DISP=OLD
//TAPE01   DD   UNIT=3330,VOL=SER=333002,
//  DISP=(OLD,DELETE),DSNAME=USER.BACKUP
//SYSIN    DD   *
  RESTORE OUTDD(DASD02) INDD(TAPE01) DATASET(INCLUDE(**)) REPLACE
/*
```

"The following JCL code sequence connects the newly copied VSAM base cluster to its catalog and renames it to a temporary name."

```
//NAMETEMP JOB  ,MSGLEVEL=(1,1),CLASS=A,REGION=3500K
/*ROUTE     PRINT STLVM7/JTFERRO
//RENAMETM EXEC PGM=IDCAMS
//STEPCAT  DD   DSN=USE.CAT2,DISP=SHR
//SYSPRINT DD   SYSOUT=A
//AMSDUMP  DD   SYSOUT=A
//DASD01   DD   UNIT=3330,VOL=SER=333002,DISP=OLD
//SYSIN    DD   *
  DEFINE CLUSTER (NAME(CLUSTER1.BASE) VOLUMES (333002) -
            MASTERPW(CLUSMPW1) ERASE -
            KEY (4 0) TRK(2 1) CISZ(4096) RECSZ(1000 1000) -
            RECATALOG ) -
            CATALOG (USE.CAT2/USERMPW2)

     ALTER -
        CLUSTER1.BASE/CLUSMPW1 -
        NEWNAME(TEMP1.BASE) -
        CATALOG(USE.CAT2/USERMPW2)
/*
```

"This segment removes the basic catalog segment (BCS) entries for the source base cluster without destroying the source data set."

```
//DELCLN01 JOB   ,MSGLEVEL=(1,1),CLASS=A,REGION=3500K
/*ROUTE     PRINT STLVM7/JTFERRO
/*
//* STEP 3: IDCAMS - DELETE CLUSTER NOSCRATCH OF CLUSTER1.BASE
//*                   (PAGE 197)
//DELCLN01 EXEC PGM=IDCAMS
//SYSPRINT DD    SYSOUT=A
//AMSDUMP  DD    SYSOUT=A
//DASD01   DD    UNIT=(3330),VOL=SER=333001,DISP=OLD
//SYSIN    DD    *
     DELETE -
         CLUSTER1.BASE -
         CLUSTER -
         NOSCRATCH -
         CATALOG(USE.CAT1/USERMPW1)
/*
```

"The following segment is directed to removing the VVDS entries describing the base cluster."

```
//DELVVR    JOB  ,MSGLEVEL=(1,1),CLASS=A,REGION=3500K
/*ROUTE     PRINT STLVM7/JTFERRO
//* STEP 4A: IDCAMS - DELETE VVR NOSCRATCH OF CLUSTER1.BASE.INDEX
//*                   (PAGE 197)
//*                    DELETE VVR NOSCRATCH OF CLUSTER1.BASE.DATA
//*                   (PAGE 197)
//DELVVRN1 EXEC PGM=IDCAMS
//STEPCAT  DD   DSN=USE.CAT1,DISP=SHR
//SYSPRINT DD   SYSOUT=A
//AMSDUMP  DD   SYSOUT=A
//DASD01   DD   UNIT=3330,VOL=SER=333001,DISP=OLD
//SYSIN    DD   *
     DELETE -
          CLUSTER1.BASE.INDEX -
          VVR -
          NOSCRATCH -
          FILE(DASD01) -
          CATALOG(USE.CAT1/USERMPW1)
/*
//* STEP 4B: IDCAMS - DELETE VVR NOSCRATCH OF CLUSTER1.BASE.INDEX
//*                   (PAGE 197)
//*                    DELETE VVR NOSCRATCH OF CLUSTER1.BASE.DATA
//*                   (PAGE 197)  .
//DELVVRN2 EXEC PGM=IDCAMS
//STEPCAT  DD   DSN=USE.CAT1,DISP=SHR
//SYSPRINT DD   SYSOUT=A
//AMSDUMP  DD   SYSOUT=A
//DASD01   DD   UNIT=3330,VOL=SER=333001,DISP=OLD
//SYSIN    DD   *
     DELETE -
          CLUSTER1.BASE.DATA -
          VVR -
          NOSCRATCH -
          FILE(DASD01) -
          CATALOG(USE.CAT1/USERMPW1)
/*
```

"This segment operates to substitute the original name for the temporary name."

```
//NEWNAME  JOB  ,MSGLEVEL=(1,1),CLASS=A,REGION=3500K
/*ROUTE     PRINT STLVM7/JTFERRO
//* STEP 5: IDCAMS - ALTER NEWNAME TEMP1.BASE TO CLUSTER2.BASE
//*                   (PAGE 37)
//NEWNAM01 EXEC PGM=IDCAMS
//STEPCAT  DD   DSN=USE.CAT2,DISP=SHR
//SYSPRINT DD   SYSOUT=A
//AMSDUMP  DD   SYSOUT=A
//DASD01   DD   UNIT=(3330),VOL=SER=333002,DISP=OLD
//SYSIN    DD   *
     ALTER -
          TEMP1.BASE/CLUSMPW1 -
          NEWNAME(CLUSTER1.BASE)
/*
```

"This segment redefines alternate indices present on the source volume
but now form a portion of the target volume."

```
//DEFAIXS   JOB  ,MSGLEVEL=(1,1),CLASS=A,REGION=3500K
//JOBCAT    DD    DSN=USE.CAT2,DISP=SHR
/*ROUTE     PRINT STLVM7/JTFERRO
//* STEP 6: SUPERZAP - PUT CLUSTER2.BASE CATALOG NAME IN AIX VVRS
//* STEP 7: IDCAMS - DEFINE ALTERNATEINDEX RECATALOG FOR CLUSTER.AIX1
//*                 (PAGE 77)
//*                  DEFINE ALTERNATEINDEX RECATALOG FOR CLUSTER.AIX2
//*                 (PAGE 77)
//*                  DEFINE ALTERNATEINDEX RECATALOG FOR CLUSTER.AIX3
//*                 (PAGE 77)
//*                  DEFINE ALTERNATEINDEX RECATALOG FOR CLUSTER.AIX4
//*                 (PAGE 77)
//DEFAIXR1 EXEC PGM=IDCAMS
//SYSPRINT DD    SYSOUT=A
//AMSDUMP  DD    SYSOUT=A
//DASD01   DD    UNIT=3330,VOL=SER=333001,DISP=OLD
//SYSIN    DD    *
     DEFINE ALTERNATEINDEX -
          (NAME(CLUSTER.AIX1) -
          RELATE(CLUSTER1.BASE) -
          ATTEMPTS(3) -
          VOLUMES(333001) -
          TRACKS(1 1) -
          RECATALOG )
/*
//DEFAIXR2 EXEC PGM=IDCAMS
//SYSPRINT DD    SYSOUT=A
//AMSDUMP  DD    SYSOUT=A
//DASD01   DD    UNIT=3330,VOL=SER=333001,DISP=OLD
//SYSIN    DD    *
     DEFINE ALTERNATEINDEX -
          (NAME(CLUSTER.AIX2) -
          RELATE(CLUSTER1.BASE) -
          ATTEMPTS(3) -
          VOLUMES(333001) -
          TRACKS(1 1) -
          RECATALOG )
/*
//DEFAIXR3 EXEC PGM=IDCAMS
//SYSPRINT DD    SYSOUT=A
//AMSDUMP  DD    SYSOUT=A
//DASD01   DD    UNIT=3330,VOL=SER=333001,DISP=OLD
//SYSIN    DD    *
     DEFINE ALTERNATEINDEX -
          (NAME(CLUSTER.AIX3) -
          RELATE(CLUSTER1.BASE) -
          ATTEMPTS(3) -
          VOLUMES(333001) -
          TRACKS(1 1) -
          RECATALOG )
/*
```

```
//DEFAIXR4 EXEC PGM=IDCAMS
//SYSPRINT DD   SYSOUT=A
//AMSDUMP  DD   SYSOUT=A
//DASD01   DD   UNIT=3330,VOL=SER=333001,DISP=OLD
//SYSIN    DD   *
     DEFINE ALTERNATEINDEX -
          (NAME(CLUSTER.AIX4) -
          RELATE(CLUSTER1.BASE) -
          ATTEMPTS(3) -
          VOLUMES(333001) -
          TRACKS(1 1) -
          RECATALOG )
/*
```

"This segment adds the candidate volumes to the base cluster on the target volume."

```
//ADDVOLM  JOB  ,MSGLEVEL=(1,1),CLASS=A,REGION=3500K
/*ROUTE    PRINT STLVM7/JTFERRO
//* STEP 8: IDCAMS - ALTER ADDVOLUME FOR ONE CANDIDATE VOLUME
//*                   (PAGE 37)
//ADDVOL02 EXEC PGM=IDCAMS
//STEPCAT  DD   DSN=USE.CAT2,DISP=SHR
//SYSPRINT DD   SYSOUT=A
//AMSDUMP  DD   SYSOUT=A
//DASD01   DD   UNIT=(3330),VOL=SER=333002,DISP=OLD
//SYSIN    DD   *
     ALTER -
          CLUSTER1.BASE.DATA -
          ADDVOLUMES(333001)
/*
```

"This segment defines the paths for the alternate indices to the base cluster on the target volume."

```
//DEFPATHS JOB   ,MSGLEVEL=(1,1),CLASS=A,REGION=35COK
/*ROUTE    PRINT STLVM7/JTFERRO
//* STEP 9: IDCAMS - DEFINE PATH FOR CLUSTER.AIX1
//*                (PAGE 161)
//*                 DEFINE PATH FOR CLUSTER.AIX2
//*                (PAGE 161)
//*                 DEFINE PATH FOR CLUSTER.AIX3
//*                (PAGE 161)
//*                 DEFINE PATH FOR CLUSTER.AIX4
//*                (PAGE 161)
//DEFPATH1 EXEC PGM=IDCAMS
//STEPCAT   DD   DSN=USE.CAT2,DISP=SHR
//SYSPRINT DD   SYSOUT=A
//AMSDUMP   DD   SYSOUT=A
//DASD01    DD   UNIT=(3330),VOL=SER=333002,DISP=OLD
//SYSIN     DD   *
    DEFINE PATH -
        (NAME(CLUSTER.PATH1) -
        PATHENTRY(CLUSTER.AIX1) )
/*
//DEFPATH2 EXEC PGM=IDCAMS
//STEPCAT   DD   DSN=USE.CAT2,DISP=SHR
//SYSPRINT DD   SYSOUT=A
//AMSDUMP   DD   SYSOUT=A
//DASD01    DD   UNIT=(3330),VOL=SER=333002,DISP=OLD
//SYSIN     DD   *
    DEFINE PATH -
        (NAME(CLUSTER.PATH2) -
        PATHENTRY(CLUSTER.AIX2) )
/*
//DEFPATH3 EXEC PGM=IDCAMS
//STEPCAT   DD   DSN=USE.CAT2,DISP=SHR
//SYSPRINT DD   SYSOUT=A
//AMSDUMP   DD   SYSOUT=A
//DASD01    DD   UNIT=(3330),VOL=SER=333002,DISP=OLD
//SYSIN     DD   *
    DEFINE PATH -
        (NAME(CLUSTER.PATH3) -
        PATHENTRY(CLUSTER.AIX3) )
/*
//DEFPATH4 EXEC PGM=IDCAMS
//STEPCAT   DD   DSN=USE.CAT2,DISP=SHR
//SYSPRINT DD   SYSOUT=A
//AMSDUMP   DD   SYSOUT=A
//DASD01    DD   UNIT=(3330),VOL=SER=333002,DISP=OLD
//SYSIN     DD   *
    DEFINE PATH -
        (NAME(CLUSTER.PATH4) -
        PATHENTRY(CLUSTER.AIX4) )
/*
```

## Claims

1. A method for moving a base cluster of VSAM (KSDS or ESDS) from a source to a target DASD volume, said source including an index and alternate indices into the cluster, a catalog mapping relations among VSAM components including candidate volumes, a virtual volume data set and records (VVDS and VVR) describing the VSAM components, and a volume table of contents - (VTOC) relating VSAM component names to volume addresses, said method maintaining the integrity of the cluster and associated catalogs, and characterized by the steps of:

(a) creating a newly defined VSAM data set and moving the data cluster onto the target volume;

(b) defining the indices, if any, on the target volume; and

(c) renaming the newly defined data set.

2. A method according to claim 1, characterized by the steps of:

(a) creating a newly defined catalog record and allocating space for a cluster on the target volume;

(b) moving a designated cluster to the defined space;

(c) disconnecting the alternate index from the original catalog record and reconnecting said alternate index into the newly defined cluster;

(d) retrieving other associated catalog information such as paths, candidate volumes, and passwords, and defining such associated information into the newly defined catalog record;

(e) deleting the original catalog record and cluster; and

(f) renaming the newly defined catalog record to the original name.

3. A method according to claim 1, wherein the step of creating the VSAM data set includes the steps of defining a new base cluster catalog entry under a temporary name from the target data set, said new cluster entry selectively residing in the same or different catalog from that of the source cluster entry.

4. A method according to claim 2, wherein the step of deleting the original catalog record and cluster includes the steps of (a) deleting the basic catalog structure entry for the source base cluster; (b) overwriting the data component of the source base clusters if the data set is protected; and (c) deleting the VVR's and the DSCB's and releasing the space for the source base cluster.

5. A method according to claim 1, wherein in step (a) the moving is prefected by way of full-track read and write operations and not at the logical record processing level.

6. A method according to claim 2, wherein in step (b) the moving is perfected by way of full-track read and write operations and not at the logical record processing level.

| CPU VVDS MANAGER | | STORAGE SUBSYSTEM |

**FIG. 1**

DASD VOLUME          VVDS MANAGER

CATALOG
VVDS & VVR
INDEX
ALTERNATE INDICES
BASE CLUSTER

| DASD SOURCE | | DASD TARGET |

VSAM:=INDEX
SEQUENTIAL
ACCESS
METHOD

---

EVALUATE SOURCE DATA SET CHARACTERISTICS

↓

DEFINE TARGET DATA SET IN NEW ENVIRONMENT

↓

COPY SOURCE DATA TO TARGET DATA SET VIA
FULL-TRACK READ AND WRITE OPERATIONS

↓

DISCONNECT SOURCE CATALOG STRUCTURE

↓

RENAME TARGET DATA SET TO ORIGINAL NAME

**FIG. 2**

↓

UPDATE ORIGINAL AIX REFERENCES TO NEW CATALOG (IF NEEDED)

↓

COMPLETE ORIGINAL SPHERE ENTRIES OVER TARGET DATA SET

↓

DELETE SOURCE DATA SET